Europäisches Patentamt

European Patent Office

Office européen des brevets

(19)

(11) Publication number : **0 648 818 A1**

(12) **EUROPEAN PATENT APPLICATION**

(21) Application number : 94307298.3

(22) Date of filing : 05.10.94

(51) Int. Cl.$^6$ : **C09C 1/02,** C01B 35/12, C09D 5/08

(30) Priority : 06.10.93 JP 250703/93
26.08.94 JP 202440/94

(43) Date of publication of application :
19.04.95 Bulletin 95/16

(84) Designated Contracting States :
AT BE CH DE DK ES FR GB GR IE IT LI LU MC NL PT SE

(71) Applicant : SAKAI CHEMICAL INDUSTRY CO., LTD.,
1-1-23, Ebisunochonishi
Sakai-shi, Osaka 590 (JP)

(72) Inventor : Ohtsu, Koichi
10, Onahama-aza-Kaminarizuka
Iwaki-shi, Fukushima 971 (JP)
Inventor : Yoshida, Hirobumi
1136-5, Kuruma,
Hanakawa-machi
Kitaibaragi-shi, Ibaragi 319-15 (JP)
Inventor : Akamatsu, Nobukazu
10, Onahama-aza-Kaminarizuka
Iwaki-shi, Fukushima 971 (JP)

(74) Representative : W.P. THOMPSON & CO.
Eastcheap House
Central Approach
Letchworth, Hertfordshire SG6 3DS (GB)

(54) Strontium borate pigment composition, method of making same, and processes for imparting anti-corrosive, anti-bacterial and/or anti-fungal, and non-flammable properties to materials by using same.

(57)　The present invention relates to a pigment composition comprising, as an effective ingredient, a strontium borate compound of the general formula (I) :

$$nSrO \cdot mB_2O_3 \cdot xH_2O \qquad (I)$$

where $O < n \leqq 3$, $O < m \leqq 4$, $O \leqq x \leqq 5$ ;

a pigment composition comprising particles of a strontium borate compound whose surfaces are coated with $SiO_2$ and a method of producing the same ; and

processes for imparting anti-corrosive, anti-bacterial and/or anti-fungal, and non-flammable properties to materials by using the above pigments.

The above strontium borate pigment compositions are excellent in anti-corrosive, anti-bacterial, anti-fungal, and non-flammable properties, and yet are atoxic. In addition, since they are white, they realize a desired coloration of a material. Particularly, the pigment comprising particles coated with $SiO_2$ is excellent in water resistance as well as being excellent in the aforesaid properties.

Each of the processes is highly safe, and allows the materials to possess every property above-mentioned.

EP 0 648 818 A1

## BACKGROUND OF THE INVENTION

The present invention relates to novel pigment compositions having excellent anti-corrosive, anti-bacterial, anti-fungal and non-flammable properties, methods of making the same, and processes for imparting anti-corrosive, anti-bacterial and/or anti-fungal and non-flammable properties to materials by utilizing the properties of the aforesaid pigment compositions.

Conventionally, anti-corrosive paints containing an anti-corrosive pigment have been used for the corrosion prevention of a base material such as one made of iron.

The Japanese Industrial Standards (JIS) specify eight kinds of anti-corrosive paints which differ depending on the kind of anti-corrosive pigments contained therein. Among those, six kinds of the anti-corrosive paints contain chromium-based or lead-based anti-corrosive pigments. The chromium-based anti-corrosive pigments specified in JIS include zinc chromate (ZPC type and ZTO type) and the like, and the lead-based anti-corrosive pigments include minium, lead suboxide, basic lead chromate and the like.

The above anti-corrosive pigments have superior anti-corrosive properties and therefore have been widely used. They, however, contain either chromium or lead which is harmful if absorbed into human bodies. Recently, there has been a growing demand for a pollution-free anti-corrosive pigment being free from such harmful substances.

Examples of the conventionally known anti-corrosive pigments which contain neither chromium nor lead, include phosphate-based pigments such as zinc phosphate and aluminum phosphate, and molybdate-based pigments such as zinc molybdate and calcium molybdate. However, no anti-corrosive pigments having superior anti-corrosive properties comparable to that of the chromium-based or lead-based anti-corrosive pigments, are yet to come in practice.

A barium metaborate pigment, a borate-based pigment, is also known as a low-pollution anti-corrosive pigment which contains neither chromium nor lead.

However, barium metaborate is specified to be a non-medical deleterious substance by the Japanese Poisonous and Deleterious Substances Control Law and other applicable laws. Therefore, special attention should be given to the health and safety of a person who handles barium metaborate and, care should be taken not to allow people to directly touch a portion on which a paint containing the barium metaborate pigment is applied. Thus, the use of barium metaborate is limited by such situations.

Further, conventional anti-corrosive pigments such as zinc chromate are colored per se, thereby limiting the coloration of paints.

Inventors of the present invention have conducted several researches into a novel anti-corrosive pigment as an alternative to the conventional ones.

As a result, the inventors have found that a strontium borate compound of the following general formula is atoxic and pollution-free; and that it has excellent anti-corrosive properties, and has no possibility of limiting the coloration of paints because it is white.

$$nSrO \cdot mB_2O_3 \cdot xH_2O$$

(where $0 < n \leqq 3$, $0 < m \leqq 4$, and $0 \leqq x \leqq 5$)

The inventors have also found that the above strontium borate compound is not only excellent in anticorrosive properties but also excellent in anti-bacterial, anti-fungal and non-flammable properties.

## SUMMARY OF THE INVENTION

It is a principal object of the present invention to provide novel pigment compositions which can effectively utilize the aforesaid properties of the strontium borate compound and methods of efficiently producing the aforesaid novel pigment compositions.

It is another object of the present invention to provide processes for imparting anti-corrosive, anti-bacterial and/or anti-fungal and non-flammable properties to materials by utilizing the properties of the aforesaid pigment compositions.

The present invention provides an atoxic strontium borate pigment composition comprising , as an effective ingredient, a strontium borate compound of the general formula:

$$nSrO \cdot mB_2O_3 \cdot xH_2O \qquad (I)$$

where $0 < n \leqq 3$, $0 < m \leqq 4$, and $0 \leqq x \leqq 5$.

In order to obtain such a strontium borate pigment composition, it is preferable to react a water-soluble strontium salt with boric acid or a water-soluble borate in water.

Alternatively, it may be prepared by coating particles of a strontium borate compound with between 1 % and 50 % by weight of $SiO_2$. The strontium borate thus prepared is excellent in water resistance in addition to the aforesaid properties.

2

In order to produce this strontium borate pigment composition, the present invention provides a method comprising the steps of:

reacting a water-soluble strontium salt with boric acid or a water-soluble borate in water to obtain an intermediate reaction product; and

adding a water-soluble silicate to the intermediate reaction product for further reaction.

The processes for imparting anti-corrosive, anti-bacterial and/or anti-fungal, and non-flammable properties of the present invention is accomplished by blending the aforesaid strontium borate pigment composition with molding materials, fiber forming materials, coating materials such as paints, joint materials, sealants and calking materials, and the like materials.

The strontium borate pigment compositions of the present invention are atoxic to human bodies and yet have an anti-corrosive property equivalent to or superior to that of the conventional pollution-free and low-pollution anticorrosive pigments. Each of the strontium borate pigment compositions presents, if blended with a particular paint, an anti-corrosive property superior to that of conventional chromium-based pigments such as zinc chromate and lead-based pigments such as lead cyanamide.

Since they are white, the coloration of materials is not limited, unlike the conventional colored anti-corrosive pigments, they can be blended with any coloring pigments, thus being applicable to any color of paint.

Further, they are atoxic and pollution-free, and yet are excellent in anti-bacterial and/or anti-fungal, and non-flammable properties comparable to those of the aforementioned barium metaborate pigment. Accordingly, they can be employed to effectively impart anti-bacterial, anti-fungal and non-flammable properties to materials.

Particularly, the strontium borate pigment composition comprising particles of a strontium borate compound whose surfaces are coated with $SiO_2$ reduces, with its coating action, the leach-out of strontium borate into water or an organic solvent. Hence, this pigment composition may retain anti-corrosive, anti-bacterial, anti-fungal and non-flammable properties for long periods.

As discussed above, the strontium borate pigment compositions of the present invention are atoxic and pollution-free, and yet are excellent in anti-corrosive, anti-bacterial, anti-fungal and non-flammable properties. In addition, since they are white, they can be blended with any coloring pigments to realize a desired coloration of a material. It is therefore possible to readily comply with the coloration restriction.

In particular, the strontium borate pigment composition comprising particles of strontium borate compound coated with $SiO_2$ exhibits superior water resistance, enabling to retain the aforesaid properties for long periods.

The method of producing strontium borate pigment composition in the present invention realizes an easy and efficient production of the aforesaid strontium borate pigment compositions.

The processes for imparting anti-corrosive, anti-bacterial, anti-fungal and non-flammable properties to materials of the present invention are highly safe, and allow the materials to possess superior anti-corrosive, anti-bacterial, anti-fungal and non-flammable properties.

## DETAILED DESCRIPTION OF THE INVENTION

A strontium borate pigment composition of the present invention comprises a strontium borate compound of the general formula (I) as an effective ingredient.

The above strontium borate pigment composition is prepared by reacting a water-soluble strontium salt with boric acid or a water-soluble borate in water. It is desirable that this pigment composition is in granular or powdered form.

According to one preferred embodiment of the invention, the reaction of the aforesaid water-soluble strontium salt with boric acid or water-soluble borate is carried out, for example, in the following manner:

Celestite (a natural mineral, $SrSO_4$) is reduced with carbon by way of roasting to obtain strontium sulfide (SrS) of a water-soluble strontium salt, as shown in the following reaction formula:

$$SrSO_4 + 4C \rightarrow SrS + 4CO \quad (1)$$

Then, the reaction product is immersed in hot water to leach out strontium sulfide, and the residue is filtered out. Borax ($Na_2B_4O_7 \cdot 5H_2O$) of a water-soluble borate is added to the filtrate for reaction with strontium sulfide in the filtrate. Thus, strontium metaborate ($SrO \cdot B_2O_3 \cdot H_2O$) is obtained as shown in the following reaction formula:

$$2SrS + Na_2B_4O_7 \cdot 5H_2O \rightarrow 2(SrO \cdot B_2O_3 \cdot H_2O) + 2NaSH + 2H_2O \quad (2)$$

The temperature of the hot water for leaching out strontium sulfide is preferably between about 60°C and about 80°C in consideration of productivity and operation safety. The concentration of strontium sulfide leached out into hot water is between about 10g/l and about 120g/l, preferably between about 50g/l and about 70g/l in consideration of productivity.

Though the reaction shown in the reaction formula (2) can proceed under atmospheric pressure, obtained particles are irregular in size. Therefore, this reaction is carried out in the following manner:

The strontium sulfide solution is placed in an autoclave and stirred at a temperature higher than a solubility point of the strontium sulfide, and borax of an amount required for the reaction is added little by little to the solution with stirring. After the temperature of the reaction mixture is raised up to between about 50°C and about 80°C, the reaction is allowed to proceed for about 10 minutes to about 3 hours under atmospheric pressure. Subsequently, the temperature of the reaction mixture is raised up to between about 100°C and about 150°C, and then the mixture is stirred for about 1 hour to about 5 hours under a pressure of about 1.0kg/cm$^2$ to about 3kg/cm$^2$.

At this time, the molar ratio of boron in the water-soluble borate to strontium in the water-soluble strontium salt is 0 < (B/Sr) $\leqq$ 5, preferably 1 $\leqq$ (B/Sr) $\leqq$ 3.

A reaction in which boric acid is employed instead of borax proceeds under atmospheric pressure in accordance with the following reaction formula:

$$SrS + 2H_3BO_3 \rightarrow SrO \cdot B_2O_3 \cdot H_2O + H_2S \uparrow + H_2O \quad (3)$$

The reaction temperature and period are substantially the same as those of the foregoing reaction. The molar ratio of strontium in the water-soluble strontium salt to boron in boric acid is substantially the same as that of strontium to boron in the foregoing reaction.

A reaction in which strontium chloride is employed instead of strontium sulfide proceeds under atmospheric pressure in accordance with the following reaction formulae:

$$SrS + 2HCl \rightarrow SrCl_2 + 2H_2S \quad (4)$$

$$2SrCl_2 + Na_2B_4O_7 \cdot 5H_2O + 2NaOH \rightarrow 2(SrO \cdot B_2O_3 \cdot H_2O) + 4NaCl + 4H_2O \quad (5)$$

The reaction temperature and period and the molar ratio of strontium to boron are substantially the same as those of the foregoing reactions.

Examples of water-soluble strontium salts other than the aforementioned include strontium hydroxide, strontium nitrate, and the like.

Thereafter, from the above reaction system, a reaction product is filtered, rinsed with water, and dried in a known manner, and then pulverized into a granular or powdered form, thus obtaining the strontium borate pigment of the present invention.

The preferred strontium borate pigment composition comprises particles of strontium borate compound coated with between about 1 % and about 50 % by weight of SiO$_2$.

The range of the amount of SiO$_2$ used for the coating of the particles of the strontium borate compound is determined on the following basis:

If the amount of SiO$_2$ used for the coating is less than the aforementioned range, the leach-out of strontium borate can not be effectively prevented by the SiO$_2$ coating. On the other hand, if the amount of SiO$_2$ used for the coating is greater than the aforementioned range, anti-corrosive, anti-bacterial, anti-fungous and nonflammable properties deteriorate.

This strontium borate pigment composition is also prepared by reacting a water-soluble strontium salt with boric acid or water-soluble borate in water, and adding a water-soluble silicate to the same reaction system for further reaction. This reaction is carried out, for example, in the following manner:

After the completion of the reaction shown in the reaction formula (2) which is carried out, for example, in an autoclave at an increased temperature and under an increased pressure, the pressure is reduced to atmospheric pressure and the temperature is lowered to between room temperature and 90°C. Then, sodium silicate (Na$_2$O $\cdot$ nSiO$_2$ $\cdot$ nH$_2$O) of a water-soluble silicate is added to the reaction solution, and the reaction mixture is stirred for a certain period. In this process, sodium silicate is decomposed by an acid remaining in the reaction solution and by heat generated in the reaction system, and SiO$_2$ is deposited on the surface of particles of strontium borate. As a result, the strontium borate pigment composition comprising strontium borate particles coated with SiO$_2$ is obtained.

At this time, the amount of sodium silicate is determined by the amount of the SiO$_2$ coating formed on the strontium borate particles.

If sodium silicate is added to the reaction system during the reaction of a water-soluble strontium salt with boric acid or a water-soluble borate, part of the produced SiO$_2$ is taken into particles of strontium borate which are under growing process, and this will result in an insufficient SiO$_2$ coating on the particles. Therefore, sodium silicate should be added to the reaction system after the completion of the aforesaid reaction.

Examples of strontium borate compounds which are a main component of the strontium borate pigment composition thus synthesized in the present invention include those having the following structural formulae:

$$SrO \cdot B_2O_3$$
$$SrO \cdot 2B_2O_3$$
$$2SrO \cdot B_2O_3$$
$$SrO \cdot 3B_2O_3$$

$$3SrO \cdot B_2O_3$$
$$SrO \cdot 3B_2O_3 \cdot 5H_2O$$
$$SrO \cdot 4B_2O_3 \cdot 2H_2O$$
$$SrO \cdot B_2O_3 \cdot 4H_2O$$
$$SrO \cdot B_2O_3 \cdot H_2O$$
$$SrO \cdot 3B_2O_3 \cdot 2H_2O$$
$$SrO \cdot 3B_2O_3 \cdot 4H_2O$$

The above strontium compounds having the respective structural formulae are atoxic and yet have superior anticorrosive, anti-bacterial, anti-fungal and non-flammable properties.

Next, there will be hereinafter described processes for imparting anti-corrosive, anti-bacterial and anti-fungal to materials in the present invention.

For a pigment used in the aforesaid processes, there employs a strontium borate pigment composition comprising an effective ingredient of the strontium borate compound of the general formula (I).

In the processes of the present invention, the aforesaid strontium borate pigment composition is blended with molding materials, fiber forming materials, coating materials such as paints, joint materials, sealants and calking materials, and the like materials.

For use in the anti-corrosive property imparting process, for example, the aforesaid strontium borate pigment composition is blended with various known vehicles to prepare anti-corrosive paints.

Examples of such paints include oil paints containing a semi-drying oil or a drying oil such as linseed oil, tung oil or soybean oil, cellulose derivative paints containing nitrocellulose or ethylcellulose, phenol resin paints, alkyd resin paints (short-oil type, middle-oil type, and long-oil type), aminoalkyd resin paints, acrylic resin paints, fluoro-resin paints, photo-curable or catalyst-curable unsaturated resin paints, epoxy resin paints, polyurethane paints, silicone paints, emulsion paints, and water-soluble resin paints.

The strontium borate pigment composition is contained in an anti-corrosive paint in an amount ranging from about 0.1% to about 50% by weight, preferably from about 5% to 10% by weight of the total amount of the anti-corrosive paint.

The aforesaid anti-corrosive paints can be applied to a base material in a variety of ways such as brush coating and spray coating, but not limited thereto.

In the anti-bacterial property imparting process, the strontium borate pigment compound is blended, for example, with paints to be applied on wall and floor in medical facilities and food processing plants, with fiber forming materials which are made into fibers for clothes and towels to be used in medical facilities and food processing plants, and with molding materials which are made into containers for perishable foods and tableware.

In the anti-fungal property imparting process, the strontium borate pigment composition is blended, for example, with joint materials to be used for a bathroom and kitchen, with plastic molding materials which are made into plastic products to be used in a bathroom and kitchen, and with paints to be applied on interior and exterior walls of a building in a humid environment.

In the non-flammability imparting process, the strontium borate pigment composition is blended, for example, with plastic molding materials which are made into plastic components of automobiles and electrical appliances, and building materials which may create a cause of fire.

## EXAMPLES

Having thus been disclosed, the present invention will be hereinafter detailed by way of the following examples. It should be understood, however, that the present invention is not to be limited to the specifics thereof.

### *EXAMPLE 1*

(*Preparation of strontium borate pigment composition*)

### SYNTHESIS EXAMPLE 1

A strontium sulfide solution (60g/l) was prepared and heated up to 75°C. 33.3g of borax (pentahydrate salt) was added to 500ml of the strontium sulfide solution, and the reaction mixture was put in a pressure vessel to react with each other at a temperature of 75°C under atmospheric pressure with stirring for 30 minutes.

Then, the temperature of the pressure vessel was raised up to 125°C, and the reaction mixture was continuously stirred under a gage pressure of 1.7kg/cm$^2$ for 2 hours. The reaction product was filtered with a Buchner funnel, and the obtained cake was rinsed with 1.5 liters of pure water.

Next, the rinsed cake was dried at a temperature of 120°C for 16 hours, and was pulverized by a sample mill. Thus, a white powdered substance was obtained.

Subsequently, the white powdered substance was analyzed. SrO content and $B_2O_3$ content were measured through chemical analyses by the EDTA method and mannitol method, respectively. The result of the analyses is shown below:

SrO content     54.3%

$B_2O_3$ content     35.8%

From the analytical result, the main component of the obtained white powdered substance was identified to be a strontium borate compound of the following structural formula:

$$SrO \cdot B_2O_3 \cdot 1.1H_2O$$

## SYNTHESIS EXAMPLE 2

2 liters of a strontium sulfide solution (60g/l) and 2 liters of a boric acid solution (55.7g/l) were separately heated up to 75°C. The boric acid solution was added to the strontium sulfide solution at a charging rate of 25ml/min with stirring, and the reaction mixture was continuously stirred for 80 minutes for reaction.

Then, the reaction product was filtered with a Buchner funnel, and the obtained cake was rinsed with 3 liters of pure water. The rinsed cake was dried at a temperature of 120°C for 16 hours, and was pulverized by a sample mill. Thus, a white powdered substance was obtained.

Subsequently, the white powdered substance was analyzed in the same manner as the foregoing SYNTHESIS EXAMPLE 1. The result of the analysis is shown below:

SrO content     45.9%

$B_2O_3$ content     40.0%

From the analytical result, the main component of the obtained white powdered substance was identified to be a strontium borate compound of the following structural formula:

$$SrO \cdot 1.3B_2O_3 \cdot 1.8H_2O$$

## SYNTHESIS EXAMPLE 3

1 liter of a strontium chloride solution (150g/l) and 82.5g of a sodium hydroxide solution (30% by weight) separately heated up to 75°C were mixed together, and then stirred for 2 hours.

74.6g of borax (pentahydrate salt) was added to the reaction solution heated up to 90°C. Then, the reaction mixture was continuously stirred at a temperature of 90°C for 2 hours.

The reaction product was filtered with a Buchner funnel, and the obtained cake was rinsed with 2 liters of pure water. Then, the rinsed cake was dried at a temperature of 120°C for 16 hours, and was pulverized by a sample mill. Thus, a white powdered substance was obtained.

Subsequently, the white powdered substance was analyzed in substantially the same manner as the foregoing SYNTHESIS EXAMPLE 1. The result of the analysis is shown below:

SrO content                    56.1%

$B_2O_3$ content                    39.9%

Water content (Ignition loss)        9.05%

From the analytical result, the main component of the obtained white powdered substance was identified to be a strontium borate compound of the following structural formula:

$$SrO \cdot 1.1B_2O_3 \cdot 0.9H_2O$$

## SYNTHESIS EXAMPLE 4

A strontium sulfide solution (60g/l) was prepared and heated up to 75°C. 33.3g of borax (pentahydrate salt) was added to 500ml of the strontium sulfide solution, and the reaction mixture was put in a pressure vessel to react with each other at a temperature of 75°C under atmospheric pressure with stirring for 30 minutes.

Then, the temperature of the reaction vessel was raised up to 125°C, and the reaction mixture was continuously stirred under a gage pressure of $1.7kg/cm^2$ for 2 hours. Thereafter, the pressure of the reaction vessel was reduced to atmospheric pressure and the temperature was lowered to 75°C.

Next, 10.2g of sodium silicate (JIS No.3) was added to the reaction solution, and the reaction mixture was continuously stirred at a temperature of 75°C under atmospheric pressure for 30 minutes. The reaction product was filtered with a Buchner funnel, and the obtained cake was rinsed with 1.5 liters of pure water.

The rinsed cake was dried at a temperature of 120°C for 16 hours, and was pulverized by a sample mill. Thus, a white powdered substance was obtained.

Subsequently, the white powdered substance was analyzed. SrO content and $B_2O_3$ content were measured in the same manner as SYNTHESIS EXAMPLE 1, and $SiO_2$ content was measured through a chemical analysis by gravimetric method. The result of the analyses is shown below:

SrO content 52.9%
$B_2O_3$ content 33.4%
$SiO_2$ content 4.2%

From the analytical result, it was identified that the obtained white powdered substance comprised mainly a strontium borate compound of the following structural formula, and included 4.2% by weight of $SiO_2$:

$$SrO \cdot 0.9B_2O_3 \cdot H_2O$$

## SYNTHESIS EXAMPLE 5

A white powdered substance was obtained in substantially the same manner as SYNTHESIS EXAMPLE 4, except that the amount of sodium silicate (JIS No.3) added to the reaction solution was 44.9g.

Then, the white powdered substance was analyzed in the same manner as SYNTHESIS EXAMPLE 4. The result of the analysis is shown below:

SrO content 51.6%
$B_2O_3$ content 31.1%
$SiO_2$ content 7.1%

From the analytical result, it was identified that the obtained white powdered substance comprised mainly a strontium borate compound of the following structural formula, and included 7.1% by weight of $SiO_2$:

$$SrO \cdot 0.9B_2O_3 \cdot 1.1H_2O$$

## SYNTHESIS EXAMPLE 6

A strontium sulfide solution (60g/l) was prepared and heated up to 75°C. 33.3g of borax (pentahydrate salt) was added to 500ml of the strontium sulfide solution, and the reaction mixture was put in a pressure vessel to react with each other at a temperature of 75°C under atmospheric pressure with stirring for 30 minutes.

Then, 10.2g of sodium silicate (JIS No.3) was added to the reaction solution, and the reaction mixture was continuously stirred at a temperature of 75°C under atmospheric pressure for 30 minutes for reaction. Thereafter, the temperature of the reaction vessel was raised up to 125°C, and the reaction mixture was continuously stirred under a gage pressure of $1.7kg/cm^2$ for 2 hours.

The reaction product was filtered with a Buchner funnel, and the obtained cake was rinsed with 2 liters of pure water. The rinsed cake was dried at a temperature of 120°C for 16 hours, and was pulverized by a sample mill. Thus, a white powdered substance was obtained.

Subsequently, the white powdered substance was analyzed in the same manner as SYNTHESIS EXAMPLE 4. The result of the analysis is shown below:

SrO content 50.7%
$B_2O_3$ content 30.3%
$SiO_2$ content 5.4%

From the analytical result, it was identified that the obtained white powdered substance comprised mainly a strontium borate compound of the following structural formula, and included 5.4% by weight of $SiO_2$:

$$SrO \cdot 0.9B_2O_3 \cdot 1.5H_2O$$

## SYNTHESIS EXAMPLE 7

A white powdered substance was obtained in substantially the same manner as SYNTHESIS EXAMPLE 6, except that the amount of sodium silicate (JIS No.3) added to the reaction solution was 44.9g.

Then, the white powdered substance was analyzed in the same manner as SYNTHESIS EXAMPLE 4. The result of the analysis is shown below:

SrO content 43.9%
$B_2O_3$ content 22.6%
$SiO_2$ content 16.6%

From the analytical result, it was identified that the obtained white powdered substance comprised mainly a strontium borate compound of the following structural formula, and included 16.6% by weight of $SiO_2$:

$$SrO \cdot 0.8B_2O_3 \cdot 2.2H_2O$$

Next, an aqueous leach-out amount measuring test was carried out on the strontium borate pigment compositions obtained in the foregoing SYNTHESIS EXAMPLEs 1, 4, 5, 6 and 7 to measure the amount of substances leaching out of the pigment compositions into water.

*Aqueous leach-out amount measuring test (JIS K5407)*

5g of a test sample was boiled in 200ml of pure water for 5 minutes, and then filtered with a 5C filter paper by way of constant weight filtration. 100ml of the filtrate, after being weighed, was evaporated to dryness, and then the deposited solid mass was weighed. The aqueous leach-out amount (%) was calculated from the following equation:

$$\text{Aqueous leach - out amount (\%)} = \frac{\text{Solid mass (g)} \times 2}{5} \times 100$$

The calculation result is shown in Table 1.

**Table 1**

|  | Aqueous leach-out amount (%) |
|---|---|
| SYNTHESIS EXAMPLE 1 | 13.3 |
| SYNTHESIS EXAMPLE 4 | 5.8 |
| SYNTHESIS EXAMPLE 5 | 5.0 |
| SYNTHESIS EXAMPLE 6 | 13.7 |
| SYNTHESIS EXAMPLE 7 | 7.2 |

As can be seen from Table 1, the aqueous leach-out amount of the strontium borate pigment composition obtained in SYNTHESIS EXAMPLE 6 is as great as that of the strontium borate pigment composition obtained in SYNTHESIS EXAMPLE 1 which has no $SiO_2$ coating. This indicates that the pigment composition obtained in SYNTHESIS EXAMPLE 6 has little $SiO_2$ coating formed on the surface thereof.

On the other hand, the aqueous leach-out amount of the strontium borate pigment composition obtained in SYNTHESIS EXAMPLE 7 is smaller than that of the strontium borate pigment composition obtained in SYNTHESIS EXAMPLE 6. This indicates that the $SiO_2$ coating formed on the surface of the pigment composition obtained in SYNTHESIS EXAMPLE 7 is still insufficient.

On the contrary, the aqueous leach-out amounts of the strontium borate pigment compositions obtained in SYNTHESIS EXAMPLEs 4 and 5 are significantly lower than those of the strontium borate pigment compositions obtained in SYNTHESIS EXAMPLEs 1, 6 and 7 which have little or no $SiO_2$ coating. This indicates that the $SiO_2$ coating formed on the surface of the pigment compositions obtained in SYNTHESIS EXAMPLEs 4 and 5 is sufficient.

**EXAMPLE 2**

*(Anti-corrosive property imparting process)*

**1.** Preparation of anti-corrosive paints

*(A) Water-soluble melamine alkyd resin paint*

Anti-corrosive pigment and carbon black were employed as a pigment component, and the pigment weight concentration (P.W.C.) of carbon black was kept constant at 4%. Water-soluble alkyd resin (available under the trade name of "WATERSOL S-118" from Dainippon Ink & Chemicals, Inc.) containing a non-volatile content of 60% and water-soluble melamine resin (available under the trade name of "WATERSOL S-695" from Dainippon Ink & Chemicals, Inc.) containing a non-volatile content of 65% were employed as a resin component in a weight ratio of 5:95. Butylcellulose and water were employed as a diluent in a weight ratio of 2:8, and the weight ratio of the diluent to the resin component was 1:2. The content ratio is shown in Table 2.

The pigment weight concentration was calculated from the following equation:

$$\text{P.W.C.} = \frac{\text{Wrpp}}{\text{Wnvm} + \text{Wpig}} \times 100$$

where Wrpp, Wnvm and Wpig are the weight of the anti-corrosive pigment in the pigment component, the total weight of the non-volatile components including resin, and the weight of the pigment component, respectively. The total pigment weight concentration of the pigment component was calculated from the following equation:

$$\text{Total P.W.C.} = \frac{W_{pig}}{W_{nvm} + W_{pig}} \times 100$$

where $W_{nvm}$ and $W_{pig}$ are the total weight of the non-volatile components including resin, and the weight of the pigment component, respectively.

**Table 2**

| Water-soluble melamine alkyd resin paint | | |
|---|---|---|
| | Contents | Weight ratio |
| Mill base | Anti-corrosive pigment | 1.23 |
| | Carbon black | 1.66 |
| | WATERSOL S-118 | 3.45 |
| | Butylcellosolve | 2.76 |
| | Water | 11.02 |
| Let-down | WATERSOL S-118 | 58.11 |
| | WATERSOL S-695 | 3.03 |
| | Butylcellosolve | 3.77 |
| | Water | 15.09 |
| P.W.C. (%) of anti-corrosive pigment | | 3.0 |
| Total P.W.C. (%) | | 7.0 |

In a mill-base process, the pigment component was blended with and dispersed in the resin component and diluent to prepare a mill base. The pigment weight concentration of the pigment component was about 50% and the ratio of the diluent to the resin component was about 5. The mill base blended with glass beads (having a diameter of 1.5mm) in a weight ratio of 1:3 was stirred for 40 minutes for dispersion. In a let-down process, the resin component and the diluent were added to the aforesaid mill base, and the mixture was stirred for 20 minutes for dispersion to prepare an anti-corrosive paint.

**(B) Epoxy emulsion resin paint**

Anti-corrosive pigment, carbon black, calcium carbonate, and "HOMOCAL D" (calcium carbonate available from Shiraishi Calcium Kaisha, Ltd.) were employed as a pigment component. Emulsion resin (available under the trade name of "VONCORT EC-740" from Dainippon Ink & Chemicals Inc.) containing a non-volatile content of 40% and normal-drying epoxyester resin (available under the trade name of "WATERSOL CD-540" from Dainippon Ink & Chemicals Inc.) containing a non-volatile content of 40% were employed as a resin component.

A mill base blended with glass beads (having a diameter of 1.5mm) in a weight ratio of 1:3 was stirred for 40 minutes for dispersion. In a let-down process, the paint mixture was stirred for 20 minutes for dispersion to prepare an anti-corrosive paint. The content ratio is shown in Table 3.

**Table 3**

| Epoxy emulsion resin paint | | |
|---|---|---|
| | Contents | Weight ratio |
| Mill base | Anti-corrosive pigment | 2.18 |
| | Carbon black | 1.30 |
| | Calcium carbonate, | 0.32 |
| | HOMOCAL D | 4.91 |
| | SN-373 | 0.71 |
| | BYK-080 | 0.04 |
| | CD-540 | 26.06 |
| | Water | 5.00 |
| Let-down | Modified EC-740 | 64.51 |
| | Dicnate 3111 | 0.52 |
| W.C. (%) of anti-corrosive pigment | | 5.0 |
| Total P.W.C. (%) | | 20.0 |

In Table 3, "modified EC-740" is a modification of the aforesaid VONCORT EC-740 which is modified by adding 2 parts by weight of Texanol, 2 parts by weight of Butylcellosolve and 2 parts by weight of water to 100 parts by weight of VONCORT EC-740. "SN-373" is an anti-foaming agent available from Sanopco, Ltd. "BYK-080" is a surfactant available from BYK-Chemie GmbH. "Dicnate 3111" is a desiccant available from Dainippon Ink & Chemicals Inc.

*(C) Middle-oil alkyd resin paint*

Anti-corrosive pigment and titanium oxide (R-650 available from Sakai Chemical Industry Co., Ltd.) were employed as a pigment component. Middle-oil alkyd resin (available under the trade name of "BECKOSOL 1334 EL" from Dainippon Ink & Chemicals Inc.) containing a non-volatile content of 50% was employed as a resin component. The content ratio is shown in Table 4.

## Table 4

| Middle-oil alkyd resin paint | | |
|---|---|---|
| | Contents | Weight ratio |
| Mill base | Anti-corrosive pigment | 3.00 |
| | Titanium oxide (R-650) | 21.00 |
| | BECKOSOL 1334 EL | 12.00 |
| | Mineral turpentine | 5.00 |
| Let-down | BECKOSOL 1334 EL | 60.00 |
| | 6% Cobalt naphthenate | 0.10 |
| | 24% Lead naphthenate | 0.90 |
| | Disparlon 501 | 0.04 |
| | Mineral turpentine | 16.00 |
| P.W.C. (%) of anti-corrosive pigment | | 5.0 |
| Total P.W.C. (%) | | 40.0 |

A mill base blended with glass beads (having a diameter of 1.5mm) in a weight ratio of 1:2 was stirred for 40 minutes for dispersion. In a let-down process, the paint mixture was stirred for 20 minutes for dispersion to prepare an anti-corrosion paint. In Table 4, "Disparlon 501" is an anti-skinning agent available from Kusumoto Chemicals, Ltd.

**2.** Preparation of base material samples

Untreated dull steel plates (70mm×150mm×0.6mm) were employed as base material samples. The base material samples were coated with the aforesaid anti-corrosive paints in the following manner.

*(A) Water-soluble melamine alkyd resin paint and epoxy emulsion resin paint*

The paints were each applied on a base material sample 1 hour. Then, the paints applied on the base material samples were baked at a temperature of 60°C for 20 minutes and thereafter at a temperature of 135°C for 20 minutes, and allowed to stand for 24 hours.

*(B) Middle-oil alkyd resin paint*

The paint was applied on a base material sample with a bar coater No. 60, and was dried at room temperature for 7 days.

**3.** Evaluation of anti-corrosive effect and result (I)

The anti-corrosive effect of the paints was evaluated through a salt water spraying test specified in JIS Z2371. The period of spraying salt water was 504 hours for the water soluble melamine alkyd resin paint and epoxy emulsion resin paint, and 168 hours for middle-oil alkyd resin paint.

The evaluation result is shown in Tables 5 to 8. Tables 5 to 8 also show the evaluation result of comparative samples of paints containing conventional anti-corrosive pigments. The anti-corrosive effect of the paints was evaluated through visual inspection, and the evaluation result was expressed in the following manner:

E (Excellent) > G (Good) > M (Medium) > B (Bad) > W (Worst)

**Table 5**

| Anti-corrosive pigments | Water-soluble melamine alkyd resin paint | Epoxy emulsion resin paint | Middle-oil alkyd resin paint |
|---|---|---|---|
| SYNTHESIS EX. 1 | G | G | E |
| Barium metaborate | G | G | E |
| Zinc phosphate | B | B | W |
| Aluminum tripolyphosphate | M | Gelatinized | B |
| Aluminum trimolybdate | G | W | M |
| Lead Cyanamide | B | W | B |
| Zinc chromate ZPC | G | Gelatinized | G |
| Zinc chromate ZTO | G | Gelatinized | B |

**Table 6**

| Anti-corrosive pigments | Water-soluble melamine alkyd resin paint | Epoxy emulsion resin paint |
|---|---|---|
| SYNTHESIS EXAMPLE 2 | M | M |
| Barium metaborate | M | M |
| Aluminum tripolyphosphate | M | Gelatinized |
| Aluminum trimolybdate | M | W |
| Zinc chromate ZPC | G | Gelatinized |
| Zinc chromate ZTO | G | Gelatinized |

**Table 7**

| Anti-corrosive pigments | Water-soluble melamine alkyd resin paint | Epoxy emulsion resin paint |
|---|---|---|
| SYNTHESIS EXAMPLE 3 | G | G |
| Barium metaborate | M | G |
| Aluminum tripolyphosphate | G | B |
| Zinc chromate ZPC | M | Gelatinized |
| Zinc chromate ZTO | G | Gelatinized |

**Table 8**

| Anti-corrosive pigments | Water-soluble melamine alkyd resin paint | Epoxy emulsion resin paint |
|---|---|---|
| SYNTHESIS EXAMPLE 4 | G | G |
| SYNTHESIS EXAMPLE 5 | G | G |
| Barium metaborate | G | G |
| Aluminum tripolyphosphate | M | Gelatinized |
| Aluminum trimolybdate | M | W |
| Zinc chromate ZPC | G | Gelatinized |
| Zinc chromate ZTO | G | Gelatinized |

As can be seen from Tables 5 to 8, the strontium borate pigment compositions obtained in the foregoing SYNTHESIS EXAMPLEs 1 to 5 possess an anti-corrosive property equivalent to or greater than that of the conventional anticorrosive pigments.

Having an anti-corrosive property comparable to that of the conventional anti-corrosive pigments, yet the strontium borate pigment compositions obtained in SYNTHESIS EXAMPLEs 1 to 5 are atoxic. Furthermore, since these strontium borate pigment compositions are white, they can be freely blended with other coloring pigments to obtain a paint of any desired color.

**4. Evaluation of anti-corrosive effect and result (II)**

The anti-corrosive effect of the paints was evaluated through a water resistance test specified in JIS K5400. The period of immersing a test sample in water was 240 hours.

The evaluation result is shown in Table 9. Table 9 also shows the evaluation result of comparative samples of paints containing conventional anti-corrosive pigments. The anti-corrosive effect of the paints was evaluated through visual inspection, and the evaluation result was expressed in the following manner:

E (Excellent) > G (Good) > M (Medium) > B (Bad) > W (Worst)

**Table 9**

| Anti-corrosive pigments | Middle-oil alkyd resin paint |
|---|---|
| SYNTHESIS EXAMPLE 1 | W |
| SYNTHESIS EXAMPLE 4 | G |
| SYNTHESIS EXAMPLE 5 | G |
| Barium metaborate | M |
| Aluminum tripolyphosphate | G |
| Aluminum trimolybdate | G |
| Zinc chromate ZPC | M |
| Zinc chromate ZTO | E |

As can be seen from Table 9, the strontium borate pigment compositions having an $SiO_2$ coating on the surface thereof, which were obtained in the foregoing SYNTHESIS EXAMPLEs 4 and 5, possess an anti-corrosive property equivalent to or greater than that of the conventional anticorrosive pigments.

Having an anti-corrosive property comparable to that of the conventional anti-corrosive pigments, yet the strontium borate pigment compositions obtained in SYNTHESIS EXAMPLEs 4 and 5 are atoxic. Furthermore, since these strontium borate pigment compositions are white, they can be freely blended with other coloring pigments to obtain a paint of any desired color.

The strontium borate pigment obtained in SYNTHESIS EXAMPLE 1 did not exhibit satisfactory results in this Water Resistance Test, because the water resistance thereof is low as previously mentioned. However, this pigment also has the aforesaid advantages, and can be used as an anti-corrosive pigment if combined with a highly water-resistant vehicle or in an application field where water resistance is not required. Further, this strontium borate pigment can be used in processes for imparting anti-bacterial, anti-fungal and non-flammable properties to materials, which will be hereinafter described.

## EXAMPLE 3

(Anti-bacterial property imparting process)(1)

**1.** Evaluation of anti-bacterial effect and result (I) - Cup method

Three kinds of test bacteria shown below were diluted $10^3$ times with phosphate-buffered saline (PH 7.2) to prepare bacteria solutions. lml of each of the bacteria solutions was poured in a petri dish, into which 20ml of SCD agar medium kept at a temperature of 45°C was poured and homogenized. Then, the agar medium in the petri dish was cooled to room temperature and solidified to prepare a bacteria-added flat test medium (bacteria plate).

Test bacteria Ps.a: pseudomonas aeruginosa, IFO No. 13275

E.c: Escherrichia coli, IFO No. 12734

St.a: Staphylococcus aureus, IFO No. 12732

Next, a stainless cup (outer diameter: 8mm, inner diameter 6mm, height: 10mm) was dropped onto the bacteria plate from a height of 1cm, and set in place. Then, the stainless cup was filled with a test solution in which the strontium borate pigment obtained in SYNTHESIS EXAMPLE 1 was suspended in phosphate-buffered saline (PH 7.2) in a concentration of 10%.

The bacteria plate was incubated at a temperature of 35°C for 48 hours. Then, the diameter of an inhibitation zone circle around the cup was measured by means of calipers, and calculated the width of the inhibitation zone from the following equation:

Width of inhibitation zone (mm)  = (Diameter of inhibitation zone  -  Outer diameter of cup) / 2

The test result is shown in Table 10. Table 10 also shows the test result of a comparative sample of barium metaborate.

**Table 10**

| Anti-bacterial agents | Width of inhibitation zone (mm) | | |
|---|---|---|---|
| | Ps.a | E.c | St.a |
| SYNTHESIS EXAMPLE 1 | 6.8 | 0.0 | 0.0 |
| Barium metaborate | 4.3 | 0.0 | 0.0 |

As can be seen from Table 10, the strontium borate pigment obtained in SYNTHESIS EXAMPLE 1 possesses an anti-bacterial effect against pseudomonas aeruginosa greater than barium metaborate.

**2.** Evaluation of anti-bacterial effect and result (II) - Shaking-flask method

1 ml of each of the aforesaid three kinds of test bacteria and 9 ml of the aforesaid test solution (concentration: 10%) were poured into a flask, and the flask was shaken in a thermostat at a temperature of 27°C. The number of bacteria was measured by way of bacteria-mixed media plate culture before, and 24 hours and 48 hours after the shaking operation was started. The test result is shown in Table 11. Table 11 also shows the test results of a comparative sample of barium metaborate and a blank test.

**Table 11**

| Anti-bacterial agents | | Blank | SYNTHESIS EXAMPLE 1 | Barium metaborate |
|---|---|---|---|---|
| Ps.a | Before shaking | $1.1 \times 10^6$ | ← | ← |
| | After 24 hours | $9.9 \times 10^6$ | $4.5 \times 10^4$ | $1.2 \times 10^3$ |
| | After 48 hours | $3.2 \times 10^6$ | $4.3 \times 10^3$ | $3.6 \times 10^3$ |
| E.c | Before shaking | $2.5 \times 10^6$ | ← | ← |
| | After 24 hours | $6.0 \times 10^6$ | $1.5 \times 10^3$ | $1.7 \times 10^3$ |
| | After 48 hours | $6.4 \times 10^6$ | $3.0 \times 10^2$ | less than 10 |
| St.a | Before shaking | $2.4 \times 10^6$ | ← | ← |
| | After 24 hours | $4.0 \times 10^6$ | $2.4 \times 10^3$ | $1.6 \times 10^5$ |
| | After 48 hours | $3.2 \times 10^6$ | $2.0 \times 10^2$ | $1.0 \times 10^4$ |

As can be seen from Table 11, the strontium borate pigment obtained in SYNTHESIS EXAMPLE 1 possesses an anti-bacterial effect against all the aforesaid test bacteria equivalent to or greater than that of barium metaborate.

Having an anti-bacterial property comparable to that of the barium metaborate, yet the strontium borate pigment obtained in SYNTHESIS EXAMPLE 1 is atoxic, not being a deleterious substance like barium metaborate. Therefore, the strontium borate pigment will find unlimited applications.

## EXAMPLE 4

(Anti-fungal property imparting process)

**1.** Preparation of anti-fungal paint

Anti-fungal pigment, carbon black and calcium carbonate were employed as a pigment component. Emulsion resin (available under the trade name of "VONCORT EC-740" from Dainippon Ink & Chemicals Inc.) containing a non-volatile content of 40% and normal-drying epoxyester resin (available under the trade name of "WATERSOL CD-540" from Dainippon Ink & Chemicals Inc.) containing a non-volatile content of 40% were employed as a resin component.

A mill base blended with glass beads (having a diameter of 1.5mm) in a weight ratio of 1:2 was stirred for 40 minutes for dispersion. In a let-down process, the paint mixture was stirred for 20 minutes for dispersion to prepare an anti-fungal paint. The content ratio is shown in Table 12.

The pigment weight concentration of the anti-fungal pigment was calculated from the following equation:

$$P.W.C. = \frac{Wafa}{Wnvm + Wpig} \times 100$$

where Wafa, Wnvm and Wpig are the weight of the anti-fungal pigment in the pigment component, the total weight of the non-volatile components including resin, and the weight of the pigment component, respectively.

The total pigment weight concentration was calculated in the same manner as described in Example 2.

**Table 12**

| Epoxy emulsion resin paint | | |
|---|---|---|
| | Contents | Weight ratio (parts by weight) |
| Mill base | Anti-fungal pigment | 4.36 |
| | Carbon black | 1.30 |
| | Calcium carbonate | 3.05 |
| | SN-373 | 0.17 |
| | BYK-080 | 0.04 |
| | CD-540 | 26.06 |
| | Water | 5.00 |
| Let-down | Modified EC-740 | 64.51 |
| | Dicnate 3111 | 0.52 |
| P.W.C. (%) of anti-fungal pigment | | 10.0 |
| Total P.W.C. (%) | | 20.0 |

In Table 12, "modified EC-740" is a modification of the aforesaid VONCORT EC-740 which is modified by adding 2 parts by weight of Texanol, 2 parts by weight of Butylcellosolve and 2 parts by weight of water to 100 parts by weight of VONCORT EC-740. "SN-373" is an anti-foaming agent available from Sanopco, Ltd. "BYK-080" is a surfactant available from BYK-Chemie GmbH. "Dicnate 3111" is a desiccant available from Dainippon Ink & Chemicals Inc.

**2.** Evaluation of anti-fungal effect and result

The anti-fungal effect of the paint was evaluated through an anti-fungus test for paints specified in Paragraph 7 of JIS Z2911. The evaluation result is shown in Table 13.

Table 13 also shows the test results of a comparative sample of barium metaborate and a blank test. In the blank test, calcium carbonate was used in the same amount in place of the anti-fungal pigment content. The ratio of fungous area to an entire area of a test strip was calculated, and the evaluation was made on the following basis:

| Criteria | Ratio of fungus area |
|---|---|
| - | 0 % |
| +1 | less than 10% |
| +2 | 10-30% |
| +3 | 30-70% |
| +4 | more than 70% |

**Table 13**

| Anti-fungal agents | After 1 week | After 2 weeks |
|---|---|---|
| SYNTHESIS EXAMPLE 1 | +3 | +3 |
| Barium metaborate | +3 | +4 |
| Blank | +4 | +4 |

As can be seen from Table 13, the strontium borate pigment obtained in SYNTHESIS EXAMPLE 1 possesses an anti-fungal effect equivalent to or greater than that of barium metaborate.

Having an anti-bacterial property comparable to that of the barium metaborate, yet the strontium borate pigment obtained in SYNTHESIS EXAMPLE 1 is atoxic, not being a deleterious substance like barium metaborate. Therefore, the strontium borate pigment will find unlimited applications.

## EXAMPLE 5

(Non-flammable property imparting process)

**1.** Evaluation of non-flammable effect and result (I) - 45° Meckelian burner method
Ingredients shown in Table 14 were melted and mixed together to prepare a molding compound.

**Table 14**

| Ingredients | Weight ratio (parts by weight) |
|---|---|
| Polyvinylchloride | 100 |
| Dioctylphthalate | 45 |
| Epoxidated soybean oil | 5 |
| Barium stearate | 0.7 |
| Lead stearate | 0.3 |
| Chlorinated paraffin | 10 |
| Non-flammable agent | 10 |

The aforesaid molding compound was formed into a sheet test sample of length 30cm × width 20cm × thickness 2mm, and a non-flammability test was conducted on the test sample in accordance with the "Testing Method for Incombustibility of Thin Materials (45° Meckelian burner method)" specified in JIS Z2150. The heating time of the test sample was 30 seconds.

Then, the dimensions of a carbonized portion of the test sample were measured after the test. The test result is shown in Table 15. Table 15 also shows comparative test results of antimony oxide ($Sb_2O_3$), a combinational sample of antimony oxide and the strontium borate pigment obtained in SYNTHESIS EXAMPLE 1, and a blank test. For the blank test, no non-flammable agent was added to a molding mixture. The combinational sample contained 5 parts by weight of antimony oxide and 5 parts by weight of the strontium borate pigment obtained in SYNTHESIS EXAMPLE 1, the total amount of which was 10 parts by weight.

**Table 15**

| Non-flammable agents | Dimensions of carbonized portion (cm) | | |
|---|---|---|---|
| | Length | Width | Thickness |
| SYNTHESIS EXAMPLE 1 | 8.5 | 7.0 | 8.5 |
| Combinational sample | 6.3 | 4.8 | 1.0 |
| $Sb_2O_3$ | 5.9 | 4.2 | 0.6 |
| Blank | 9.2 | 7.5 | 3.4 |

After the non-flammability test, the test samples were visually inspected, and it was observed in the blank test that the carbonization spread to the back side of the test sample and a molten portion considerably sagged. In contrast to this, such phenomena were not observed in the comparative tests for antimony oxide, the strontium borate pigment obtained in SYNTHESIS EXAMPLE 1, nor the combinational sample of this strontium borate pigment and antimony oxide.

**2.** Evaluation of non-flammable effect and result (II) - Oxygen index method
The ingredients shown in Table 14 were melted and mixed together to prepare a molding compound.

17

The molding compound was formed into a test strip, and a non-flammability test was conducted on the test strip in accordance with the "Testing Method for Flammability of Polymeric Materials Using the Oxygen Index" specified in JIS K7201. The test result is shown in Table 16.

**Table 16**

| Non-flammable agents | Oxygen index |
|---|---|
| SYNTHESIS EXAMPLE 1 | 24.0 |
| Combinational sample | 28.2 |
| $Sb_2O_3$ | 30.2 |
| Blank | 23.8 |

**3.** Comprehensive evaluation of non-flammability

As can be seen from the foregoing test results, the non-flammable effect for the strontium borate pigment of SYNTHESIS EXAMPLE 1 alone was not so good. However, the combinational use of this strontium borate pigment and antimony oxide realized a non-flammable effect equivalent to that realized when a relatively large amount of antimony oxide was added to the molding compound.

Having a non-flammability comparable to that of antimony oxide when being used in combination with antimony oxide, yet the strontium borate pigment obtained in SYNTHESIS EXAMPLE 1 is atoxic, not being a deleterious substance like antimony oxide. Therefore, the strontium borate pigment will find unlimited applications.

**Claims**

1. A strontium borate pigment composition comprising, as an effective ingredient, a strontium borate compound of the general formula:
$$nSrO \cdot mB_2O_3 \cdot xH_2O \qquad (I)$$
where $0 < n \leqq 3, 0 < m \leqq 4, 0 \leqq x \leqq 5$.

2. A strontium borate pigment composition set forth in claim 1, which is prepared by the step of reacting a water-soluble strontium salt with boric acid or a water-soluble borate in water.

3. A strontium borate pigment composition set forth in claim 1, which comprises particles of a strontium borate compound of the general formula:
$$nSrO \cdot mB_2O_3 \cdot xH_2O \qquad (I)$$
where $0 < n \leqq 3, 0 < m \leqq 4, 0 \leqq x \leqq 5$, the particles' surfaces are coated with between about 1% and about 50% by weight of $SiO_2$.

4. A method of producing the strontium borate composition set forth in claim 3, comprising the steps of:
reacting a water-soluble strontium salt with boric acid or a water-soluble borate in water to provide an intermediate reaction product; and
further reacting the intermediate reaction product with a water-soluble silicate.

5. An anti-corrosive property imparting process comprising the step of blending a pigment containing, as an effective ingredient, a strontium borate compound of the general formula (I) with a coating material or a molding material.

6. An anti-corrosive property imparting process as set forth in claim 5, wherein said pigment is prepared by reacting a water-soluble strontium salt with boric acid or a water-soluble borate in water.

7. An anti-corrosive property imparting process as set forth in claim 5, wherein said pigment comprises particles of a strontium borate compound of the general formula (I) coated with between about 1% and 50% by weight of $SiO_2$.

8. An anti-bacterial and/or anti-fungal property imparting process comprising the step of blending a pigment containing, as an effective ingredient, a strontium borate compound of the general formula (I) with a coating material or a molding material.

9.  An anti-bacterial and/or anti-fungal property imparting process as set forth in claim 8, wherein said pigment is prepared by reacting a water-soluble strontium salt with boric acid or a water-soluble borate in water.

10. A non-flammability imparting process comprising the step of blending a pigment containing, as an effective ingredient, a strontium borate compound of the general formula (I) with a coating material or a molding material.

11. A non-flammability imparting process as set forth in claim 8, wherein said pigment is prepared by reacting a water-soluble strontium salt with boric acid or a water-soluble borate in water.

12. A method of preparing a strontium borate pigment composition set forth in claim 1, comprising the step of reacting a water-soluble strontium salt with boric acid or a water-soluble borate in water.

EP 0 648 818 A1

| | European Patent Office | EUROPEAN SEARCH REPORT | Application Number EP 94 30 7298 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X A | DE-A-22 45 959 (HAMMOND LEAD PRODUCTS) <br><br> * claims 1-4,19 * | 1,2,4 <br> 12 | C09C1/02 <br> C01B35/12 <br> C09D5/08 |
| X <br><br><br><br><br> A | DATABASE WPI <br> Week 7932, <br> Derwent Publications Ltd., London, GB; <br> AN 7958724B <br> & JP-A-54 080 299 (AGENCY OF IND. SCI. TECH.) 26 June 1979 <br><br> * abstract * | 1,2,4 <br><br><br><br><br> 12 | |
| A | EP-A-0 434 391 (BUCKMAN LABORATORIES INTERNATIONAL) | | |
| A | PATENT ABSTRACTS OF JAPAN <br> vol. 9, no. 233 (C-304) 19 September 1985 <br> & JP-A-60 090 266 (ONAHAMA SAKAI KAGAKU) 21 May 1985 <br> * abstract * | 1,5,8,10 | |
| A | US-A-3 060 049 (S. J. BUCKMAN ET AL.) | | |
| A | CH-A-580 151 (G. F. MEYER) <br> * claim 4 * | 1,5 | |
| A | CHEMICAL ABSTRACTS, vol. 61, no. 11, <br> 23 November 1964, Columbus, Ohio, US; <br> abstract no. 12922g, <br> page 1964 ;column R ; <br> * abstract * <br> & U. S. DEPT. COM. OFFICE TECH. SERV., AD 411,490, 1963 | 1 | |

TECHNICAL FIELDS SEARCHED (Int.Cl.6)

C09C
C01B
C09D

-/--

The present search report has been drawn up for all claims

| Place of search | Date of completion of the search | Examiner |
|---|---|---|
| THE HAGUE | 6 December 1994 | VAN BELLINGEN, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

20

European Patent
Office

**EUROPEAN SEARCH REPORT**

Application Number

EP 94 30 7298

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | ZEITSCHRIFT FUR ANORGANISCHE UND ALLGEMEINE CHEMIE, vol.326, 1963, LEIPZIG DD pages 31 - 43 H.-A. LEHMANN ET AL. 'Zur Kenntnis des Systems SrO-B2O3-H2O und seiner Verbindungen' ----- | 1 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 6 December 1994 | VAN BELLINGEN, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document